# EUROPÄISCHE PATENTANMELDUNG

(11) **EP 1 030 234 A1**
(43) Veröffentlichungstag der Anmeldung: **23.08.2000**
(21) Anmeldenummer: 00102721.8
(22) Anmeldetag: 10.02.2000
(51) Int. Cl.: G05D 23/19

(54) **Zeitsteuereinrichtung für eine Heizungsanlage**

(30) Priorität: 20.02.1999 DE 19907337
(71) Anmelder: Diehl Controls Nürnberg GmbH & Co. KG, 90451 Nürnberg (DE)
(72) Erfinder: Taag, Jürgen, 42859 Remscheid (DE)
(74) Vertreter: Hofmann, Gerhard, Dipl.-Ing. Patentassessor

(57) **Zusammenfassung**

Bei einer Zeitsteuereinrichtung für eine Heizungsanlage steuert eine Heizgerätsteuerung 6 ein Heizgerät 4 entsprechend eines an ihr eingestellten Zeitprogramms. Die Steuerung des Heizgeräts 4 soll auf für den Benutzer komfortable Weise an eine geplante Aufstehzeit angepaßt werden. Hierfür weist eine von einem Benutzer in üblicher Weise einstellbare Weckuhr 7 ein Sendemodul 8 auf, das ein der eingestellten Weckzeit entsprechendes Signal sendet. Die Heizgerätsteuerung 6 weist ein Empfangsmodul 9 auf und wertet das Signal zur Steuerung des Heizgeräts 4 aus.

## Beschreibung

Die Erfindung betrifft eine Zeitsteuereinrichtung für eine Heizungsanlage, wobei eine Heizgerätsteuerung ein Heizgerät entsprechend eines an ihr eingestellten Zeitprogramms steuert.

Heizungsanlagen müssen nach der Heizungsanlagenverordnung mit einer Einrichtung zur zeitabhängigen Steuerung der Wärmezufuhr ausgerüstet sein. Die Zeitsteuerung wird mittels einer programmierbaren Zeitschaltuhr vorgenommen. Das Zeitprogramm beinhaltet auf den Tag und/oder die Woche bezogene Schaltzeitpunkte, ab denen das Heizgerät mit einer größeren oder kleineren Leistung arbeiten und/oder auf eine höher oder niedrigere Raum-Solltemperatur umschalten soll. Beispielsweise genügen oft nachts kleinere Raumtemperatur-Sollwerte als tags; am Wochenende werden oft andere Raumtemperatur-Sollwerte gewünscht als wochentags.

Das gewünschte Zeitprogramm ist an der Heizgerätsteuerung einzustellen. Insbesondere wenn die Heizgerätsteuerung mit einer Digitalschaltuhr arbeitet, werden an sich für einen wirtschaftlichen Heizbetrieb mögliche Änderungen des Zeitprogramms selten vom Benutzer vorgenommen, weil er den Eingabevorgang oft als zu komplex empfindet. Im übrigen müßte der Benutzer, wenn er das Zeitprogramm verstellt hat und wieder den ursprünglichen Zustand einstellen will, eine weitere Eingabe vornehmen. Aus diesen Gründen akzeptiert der Benutzer häufig einen wenig komfortablen Zustand, indem der Raumtemperatur-Sollwert für den jeweiligen Einzelfall zu hoch oder zu niedrig eingestellt ist.

Bei Heizgerätsteuerungen ist auch die Möglichkeit bekannt, mittels eines Handumschalters das Zeitprogramm zu umgehen, wodurch allerdings die Wirtschaftlichkeit des Betriebs beeinträchtigt ist.

Für Benutzer, die wechselnde Arbeitszeiten haben und bei denen die Zeiten des morgendlichen Aufstehens unterschiedlich sind, ist es umständlich, jedesmal das Zeitprogramm der Heizgerätsteuerung anzupassen, um am nächsten Morgen beim Aufstehen in den Räumen die gewünschte Temperatur vorzufinden. Wenn der vom Zeitprogramm gesteuerte Heizbeginn, d.h. das Ende des Absenkbetriebs, nach der Aufstehzeit liegt, sind die Räume noch kalt, was unkomfortabel ist; wenn der Heizbeginn länger als eine gewisse Vorlaufzeit vor der Aufstebzeit liegt, sind die Räume schon lange warm, was unwirtschaftlich ist.

Aufgabe der Erfindung ist es, eine Zeitsteuereinrichtung der eingangs genannten Art vorzuschlagen, bei der die Steuerung des Heizgeräts auf für den Benutzer komfortable Weise an eine geplante Aufstehzeit anzupassen ist.

Erfindungsgemäß ist obige Aufgabe dadurch gelöst, daß eine von einem Benutzer in üblicher Weise einstellbare Weckuhr ein Sendemodul aufweist, das ein der eingestellten Weckzeit entsprechendes Signal sendet und daß die Heizgerätsteuerung ein Empfangsmodul für das Signal aufweist und dieses Signal zur Steuerung des Heizgeräts auswertet.

Dem Benutzer ist geläufig, wie er seine Weckuhr auf eine gewünschte Weckzeit einstellt. Die eingestellte Weckzeit wird über das Empfangsmodul empfangen und von der Heizgerätsteuerung derart ausgewertet, daß das Heizgerät zur Weckzeit, ggf. um eine heizungsanlagenbedingte Vorlaufzeit vor der Weckzeit, einschaltet bzw. den Absenkbetrieb beendet und damit die Räume auf eine vorgewählte Tages-Solltemperatur bringt. Das Zeitprogramm der Heizgerätsteuerung wird dabei umgangen. Es bleibt jedoch erhalten und wird wirksam, wenn keine Weckzeit eingestellt oder aktiviert ist.

Der Benutzer paßt damit die Heizgerätsteuerung gleichzeitig mit dem Einstellen der Weckzeit automatisch an. Er muß sich nicht vorher zur Heizgerätsteuerung begeben und dort ihm weniger geläufige Verstellungen des Zeitprogramms vornehmen.

Vorzugsweise ist an der Weckuhr die Weckfreigabefunktion ein- und ausschaltbar und das Sendemodul übermittelt die Weckfreigabefunktion an das Empfangsmodul. Die Heizgerätsteuerung verarbeitet das Weckzeitsignal nur dann zur Steuerung des Heizgeräts, wenn die Weckfreigabefunktion eingeschaltet ist.

In Ausgestaltung der Erfindung sendet das Sendemodul das die Weckzeit und die Weckfreigabefunktion beinhaltende Signal in Zeitintervallen nach dem Einstellen einer Weckzeit wiederholt an das Empfangsmodul. Es kann auch vorgesehen sein, daß das Sendemodul das die Weckzeit und die Weckfreigabefunktion beinhaltende Signal nur bei eingeschalteter Weckfreigabefunktion an das Empfangsmodul sendet.

Weitere vorteilhafte Ausgestaltungen der Erfindung ergeben sich aus den Unteransprüchen und der folgenden Beschreibung eines Ausführungsbeispiels. In der Zeichnung zeigen:
Figur 1 eine Heizungsanlage mit einem Heizgerät und einer Zeitsteuereinrichtung in einem Wohngebäude und
Figur 2 ein Zeitdiagramm der Steuerung des Heizgeräts.

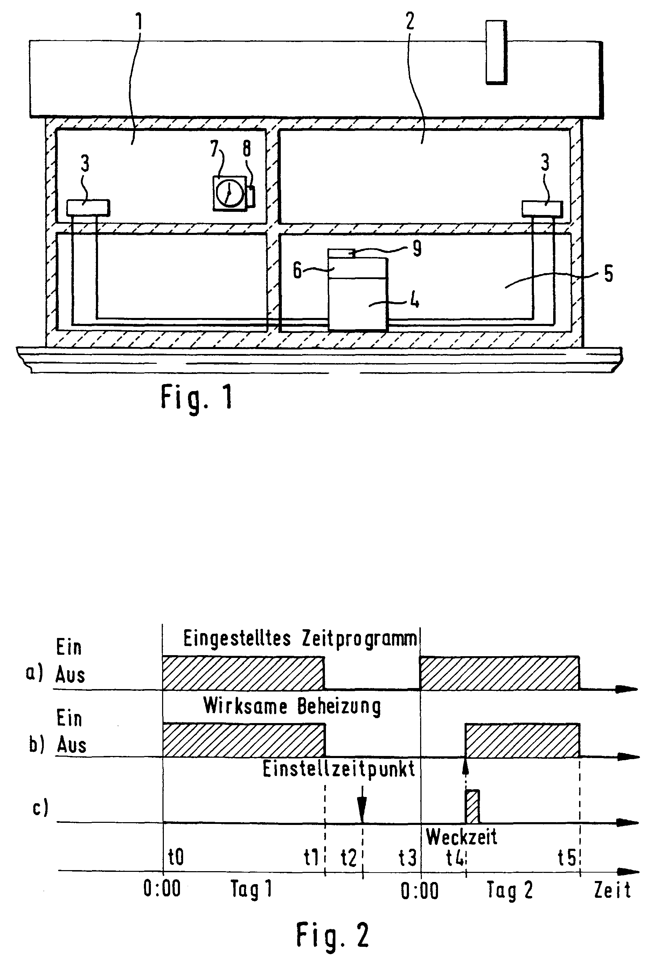

Beim Ausführungsbeispiel nach Figur 1 sind in einem Schlafraum 1 und in einem Wohnraum 2 eines Hauses oder einer Wohnung Heizkörper 3 installiert, die von einem Heizgerät 4 gespeist werden. Das Heizgerät 4 ist in einem Heizungsraum 5 aufgestellt und hat eine übliche Heizgerätsteuerung 6, an der neben anderen Parametern ein Zeitprogramm einstellbar ist, nach dem das Heizgerät auf eine höhere oder niedrigere Raum-Solltemperatur gesteuert wird. Gewöhnlich genügt zur Nachtzeit eine niedrigere Raumtemperatur als zur Tagzeit. Entsprechend wird die Raum-Solltemperatur nachts durch das Zeitprogramm abgesenkt. Das eingestellte Zeitprogramm wird von Tag zu Tag und/oder über die Tage und Wochen je nach seiner Einstellung abgearbeitet.

Im Schlafraum 1 befindet sich eine elektronische Weckuhr 7, die der Benutzer in üblicher Weise auf die von ihm gewünschte Weckzeit einstellen kann. An der Weckuhr 7 stellt der Benutzer nicht nur die Weckzeit, sondern auch die Weckfreigabefunktion ein, d.h. er stellt ein, ob die Weckuhr zum eingestellten Weckzeitpunkt ein akustisches und/oder optisches Wecksignal abgeben soll oder nicht abgeben soll.

Die Weckuhr 7 hat einen digitalen Ausgang, an dem ein die eingestellte Weckzeit und die Weckfreigabefunktion beinhaltendes Signal ansteht, das an ein mit der Weckuhr 7 integriertes Sendemodul 8 gelegt ist. Es kann auch genügen, daß das Signal nur die Weckzeit beinhaltet.

In die Heizgerätsteuerung 6 ist ein Empfangsmodul 9 integriert, das das Signal des Sendemoduls 8, insbesondere drahtlos durch Funkübertragung, empfängt. Das Sendemodul 8 und das Empfangsmodul 9 müssen nicht von vornherein mit der Weckuhr 7 bzw. der Heizgerätesteuerung 6 geliefert werden. Es kann vorgesehen sein, daß das Sendemodul 8 und das Empfangsmodul 9 im Bedarfsfall an die Weckuhr 7 bzw. an die Heizgerätsteuerung 6 anschließbar sind.

Die Heizgerätsteuerung 6 wertet das vom Empfangsmodul 9 empfangene Signal zur Steuerung des Heizgeräts 4 aus, wobei das an der Heizgerätsteuerung 6 eingestellte Zeitprogramm ggf. umgangen wird.

Ein Einstellungsbeispiel zeigt Figur 2. In Zeile a ist ein von der Heizgerätsteuerung 6 eingestelltes Zeitprogramm dargestellt. Dieses geht täglich um 0:00 Uhr in den Ein-Zustand (vgl. Zeitpunkt t0,t3) und vor 0:00 Uhr des nächsten Tages in den Aus-Zustand (vgl. Zeitpunkt t1, t5).

In Zeile b ist die wirksame Beheizung, d.h. der Einschaltbetrieb (Nichtabsenkbetrieb) und der Ausschaltbetrieb (Absenkbetrieb) des Heizgeräts 4 dargestellt. Am ersten Tag schaltet entsprechend des Zeitprogramms das Heizgerät 4 um 0:00 Uhr (Zeitpunkt t0) ein und geht entsprechend des Zeitprogramms zum Zeitpunkt t1 in den Ausschaltzustand. Wird beispielsweise zum Zeitpunkt t2 an der Weckuhr 7 eine Weckzeit eingestellt und die Weckfreigabefunktion eingeschaltet, dann sendet das Sendemodul 8 ein entsprechendes Signal aus, das vom Empfangsmodul 9 empfangen und an die Heizgerätsteuerung 6 übergeben wird. Die Aussendung des die Weckzeit und die Weckfreigabefunktion beinhaltenden Signals durch das Sendemodul 8 erfolgt nach dem Zeitpunkt t2, vor dem Zeitpunkt t3, mehrmals in Zeitintervallen. Die Heizgerätsteuerung 6 wertet das vom Empfangsmodul 9 empfangene Signal aus und erkennt aus ihm die Weckzeit und den Ein-Zustand der Weckfreigabefunktion. Die Weckzeit ist beispielsweise auf den Zeitpunkt t4 gelegt (vgl. Figur 2, Zeile c). Die Heizgerätsteuerung 6 schaltet in diesem Fall das Heizgerät 4 nicht schon zum Zeitpunkt t3, sondern spätestens zum Zeitpunkt t4 ein (vgl. Figur 2, Zeile b). Gewöhnlich wird die gewünschte Raumtemperatur nach dem Einschalten der Heizung erst nach einer gewissen, anlagenbedingten Vorlaufzeit erreicht. Dementsprechend schaltet die Heizgerätsteuerung 6 das Heizgerät 4 kurz vor dem Weckzeitpunkt t4 ein. Damit ist erreichbar, daß die Räume 1,2 bei der Weckzeit die gewünschte Temperatur haben.

Das Sendemodul 8 muß das Signal nicht immer aussenden. Es genügt, wenn das Signal bei eingeschalteter Weckfreigabefunktion gesendet wird. Dadurch wird Sendeenergie gespart.

Es ist auch möglich, daß das Sendemodul 8 die Weckzeit nur dann sendet, wenn sie geändert wurde. Solange die Weckzeit nicht geändert wird, genügt es, die Weckfreigabefunktion (Ein/Aus) zu senden.

Wird kein Signal oder das Aus-Weckfreigabesignal gesendet, dann arbeitet die Heizgerätsteuerung 6 mit dem an ihr eingestellten Zeitprogramm. Es kann vorgesehen sein, daß die Heizgerätsteuerung 6 das Heizgerät 4 ausschaltet oder in den Absenkbetrieb schaltet, wenn sie ein Ein-Weckfreigabesignal empfängt. Der Benutzer schaltet dabei beim Zubettgehen und Einschalten der Weckuhr das Heizgerät 4 ab.

Es ist möglich, an die Heizgerätsteuerung 6 auch den Zeitpunkt zu übermitteln, an dem die Weckzeit eingestellt oder verstellt wird. Dann kann von der Heizgerätsteuerung 6 die Differenz zwischen diesem Zeitpunkt und der Weckzeit gebildet werden und die Steuerung des Heizgeräts 4 nur dann beeinflußt werden, wenn die Differenz einen bestimmten Betrag überschreitet.

Um unsinnige Wirkungen zu vermeiden, kann vorgesehen sein, daß der Aufheizbeginn des Heizgeräts 4 durch die Weckzeit nur in einem vorgebbaren Zeitfenster beeinflußt werden kann oder nur der erste Heizbeginn eines Tages beeinflußt werden kann.

Arbeiten in der Wohnungen mehrere Weckuhren 7, dann läßt sich durch eine Adressierung auswählen, welche Weckuhr 7 auf die Heizgerätsteuerung 6 wirken soll. Es kann auch vorgesehen sein, daß alle Weckuhren 7 auf die Heizgerätsteuerung 6 wirken. In diesem Fall wird die Heizgerätsteuerung 6 von derjenigen Weckuhr 7 beeinflußt, die auf die früheste Weckzeit eingestellt ist und bei der die Weckfreigabefunktion eingeschaltet ist.

Es kann auch vorgesehen sein, daß bei mehreren Heizkreisen für jeden Heizkreis mit einem eigenen Zeitprogramm je eine Weckuhr zugeordnet wird.

## Patentansprüche

1. Zeitsteuereinrichtung für eine Heizungsanlage, wobei eine Heizgerätsteuerung ein Heizgerät entsprechend eines an ihr eingestellten Zeitprogramms steuert,
dadurch gekennzeichnet,
daß eine von einem Benutzer in üblicher Weise einstellbare Weckuhr(7) ein Sendemodul(8) aufweist, das ein der eingestellten Weckzeit entsprechendes Signal sendet, und daß die Heizgerätsteuerung(6) ein Empfangsmodul(9) aufweist und das empfangene Signal zur Steuerung des Heizgeräts(4) auswertet.

2. Zeitsteuereinrichtung nach Anspruch 1,
dadurch gekennzeichnet,
daß an der Weckuhr(7) die Weckfreigabefunktion ein- und ausschaltbar ist und daß das Sendemodul(8) die Weckfreigabefunktion an das Empfangsmodul(9) übermittelt und daß die Heizgerätsteuerung(6) das Weckzeitsignal nur dann zur Steuerung des Heizgeräts(4) verarbeitet, wenn die Weckfreigabefunktion eingeschaltet ist.

3. Zeitsteuereinrichtung nach Anspruch 1 oder 2,
dadurch gekennzeichnet,
daß das Sendemodul(8) das die Weckzeit und die Weckfreigabefunktion beinhaltende Signal in Zeitintervallen nach der Einstellung einer Weckzeit wiederholt an das Empfangsmodul(9) sendet.

4. Zeitsteuereinrichtung nach einem der vorhergehenden Ansprüche,
dadurch gekennzeichnet,
daß das Sendemodul(8) das die Weckzeit und die Weckfreigabefunktion beinhaltende Signal nur bei eingeschalteter Weckfreigabefunktion an das Empfangsmodul (9) sendet.

5. Zeitsteuereinrichtung nach einem der vorhergehenden Ansprüche,
dadurch gekennzeichnet,
daß das Sendemodul (8) die Weckzeit nur bei einer Änderung an das Empfangsmodul (9) sendet.

6. Zeitsteuereinrichtung nach einem der vorhergehenden Ansprüche,
dadurch gekennzeichnet,
daß die Heizgerätsteuerung (6) beim Empfang eines Ein-Weckfreigabesignals das Heizgerät (4) unabhängig von dem an ihr programmierten Zeitprogramm zum Weckzeitpunkt auf den für die Heizzeit geltenden Sollwert umschaltet.

7. Zeitsteuereinrichtung nach einem der vorhergehenden Ansprüche,
dadurch gekennzeichnet,
daß das Sendemodul (8) ein Funksender und das Empfangsmodul (9) ein Funkempfänger sind.

8. Zeitsteuereinrichtung nach einem der vorhergehenden Ansprüche,
dadurch gekennzeichnet,
daß das Sendemodul (8) der Weckuhr (7) zusätzlich ein Adreßsignal sendet, das die Heizgerätsteuerung (6) verarbeitet.

9. Zeitsteuereinrichtung nach einem der vorhergehenden Ansprüche,
dadurch gekennzeichnet,
daß mehrere Weckuhren (7) mit Sendemodulen (8) vorgesehen sind und daß die Heizgerätesteuerung (6) das Heizgerät (4) entsprechend dem Signal der auf den frühesten Weckzeitpunkt eingeschalteten Weckuhr (7) steuert.

10. Zeitsteuereinrichtung nach einem der vorhergehenden Ansprüche
dadurch gekennzeichnet,
daß das Sendemodul (8) auch den Zeitpunkt des Einstellens bzw. Änderns einer Weckzeit an das Empfangsmodul (9) übermittelt.

11. Zeitsteuereinrichtung nach einem der vorhergehenden Ansprüche,
dadurch gekennzeichnet,
daß das Sendemodul (8) die Ein-Weckfreigabefunktion sofort nach deren Einstellung sendet und daß die Heizgerätsteuerung (6) beim Empfang des Ein-Weckfreigabesignals das Heizgerät (4) ausschaltet oder in den Absenkbetrieb schaltet.
